Europäisches Patentamt

European Patent Office

Office européen des brevets

(19)

(11) Publication number: **0 087 064**
**A2**

(12) **EUROPEAN PATENT APPLICATION**

(21) Application number: **83101220.8**

(22) Date of filing: **09.02.83**

(51) Int. Cl.³: **G 06 F 11/00**

(30) Priority: **18.02.82 US 349933**

(43) Date of publication of application:
**31.08.83 Bulletin 83/35**

(84) Designated Contracting States:
**DE FR GB**

(71) Applicant: **Hewlett-Packard Company**
**Mail Stop 20 B-0 3000 Hanover Street**
**Palo Alto California 94043(US)**

(72) Inventor: **Fiasconaro, James G.**
**2617 West 28th Street**
**Loveland Colorado 80537(US)**

(74) Representative: **Schulte, Knud, Dipl.-Ing.**
**c/o Hewlett-Packard GmbH Europ. Patent- und**
**Lizenzabteilung Postfach 1430 Herrenberger Strasse 130**
**D-7030 Böblingen(DE)**

(54) Program debugging method and system.

(57) A debugging scheme is presented which enables programs to be debugged without the need to recompile the programs. This scheme requires the addition of a small set of instructions (called debugging instructions) to the instruction set of the device. These instructions are inserted at points in the program which enable debugging aids to be implemented by traps to the operating system of the device. To decrease the reduction in program execution speed, some special hardware is added to enable traps to the operating system to be avoided when such are not necessary to implement the debugging aids which have been requested. When none of the debugging aids have been requested there is only a small decrease in program execution speed so that execution speed is only significantly affected when the program is being debugged.

EP 0 087 064 A2

./...

Croydon Printing Company Ltd.

FIGURE I

Int.Ref.: EP 1585
Hewlett-Packard Company                    February 7, 1983

PROGRAM DEBUGGING METHOD AND SYSTEM

This invention is related to a method of debugging a program under control of an operating system according to the preamble of claim 1.

An important phase of generating any program is the debugging phase in which the program is tested to search for errors in the program. There are a variety of debugging aids including: (1) setting and clearing breakpoints (i.e. points in the program at which the program is to be temporarily interrupted until the program user reinitiates program execution); (2) tracing changes in variables of interest to the program user; (3) tracing the number of times a line is executed during a program; (4) stepping execution of a program (i.e. the program executes one line and then interrupts execution of the program until execution is reinitiated by the program user); and (5) reporting the history of execution of a program (i.e. a list of those procedures which have been called but have not been completely executed).

Breakpoints enable the user to interrupt the program at points of interest. For example, in a numerical integration, the user might want to monitor certain dependent variables calculated at a particular point in a program in order to see if the increments of the independent variables should be enlarged (e.g. if the slope of at least one of the dependent variables is particularly large at that choice of independent variables) or reduced (e.g. if the slope is particularly small at that point). Stepping through a program is equivalent to setting breakpoints at the end of every line and enables a detailed monitoring of the program.

Tracing changes in a variable enables the user to monitor selected variables as they change during a program. For example, a "Trace y" command produces a chronological table of y as it varies during program execution enabling the user to inspect the behavior of that variable during program execution - this makes it easy for the user to locate, for example, maxima, minima, inflection points or any other noteworthy behavior of the variable y. The tracing of the number of times a line is executed enbales the user to locate those procedures which are executed a large number of times during the execution of a program. This is useful in trying to improve the speed of execution of a program, because if such procedures are modified to obtain a given reduction in execution time, then the execution time of the program will be reduced by this amount times the number of times that that procedure is executed during the execution of the program.

A significant disadvantage of existing methods of implementing debugging aids in compiled high level languages is that each time a debugging aid is entered, the program must be recompiled. For example, if a breakpoint is to be inserted in line 23 of the program, then the program must be recompiled to insert in the beginning of line 23 the breakpoint operation. This can be accomplished by actually inserting at that point the commands which implement the breakpoint operation or can be implemented by inserting in the beginning of line 23 a jump statement which causes a jump to a procedure which implements the breakpoint operation. Similarly, if lines 15 to 29 are to be stepped through, then a breakpoint must be inserted before each of these lines. This need to recompile the program to implement debugging aids makes this procedure incompatible with debugging programs implemented in Read Only Memory (ROM). Typically, ROM programs are written and debugged in Random Access Memory (RAM) and then copied into a ROM or ROMs. Unfortunately, errors can occur during the copying or can show up only when the program is implemented in ROM. When faulty operation is detected by the user after the program has been implemented in ROM form, then the program implemented in ROM can be debugged by copying the program back to RAM form, debugging the program in RAM form and then copying the debugged program back to ROM form. Unfortunately, during the debugging phase, this procedure does not duplicate the conditions under which the user detected faulty operation (because the program is in ROM instead of RAM) and therefore this scheme is not assured of detecting all of the errors in the program. Therefore, it is important to be able to debug the programs in the same implementation as used by the user. In addition, the added steps of copying to RAM form and then back to ROM form are avoided if a debugging scheme is developed allowing debugging without the need to recompile.

In accordance with claim 1, a debugging procedure is presented which does not require the program to be recompiled. A significant advantage of this is that programs implemented in ROM form can be directly debugged without the need to copy the ROM program into RAM form, debug the program in RAM form and then manufacture new ROMs containing the debugged program. This also enables a programmer to debug a program under the same conditions encountered by a user thereby detecting errors caused by implementing the program in ROM form.

The debugging procedure requires the insertion of up to five debugging instructions into every program: a Start of Procedure (SOP) instruction is included at the start of every procedure in the program; an End of Procedure (EOP) instruction is included at the end of every procedure; a Start of Line (SOL) instruction is included at the beginning of every high level language code line; a Start of Subroutine (SOS) instruction is included at the start of every subroutine; and an End of Subroutine (EOS) instruction is included at the end of every subroutine. In order to decrease the reduction of program execution speed caused by these debugging instructions, some special hardware is added to reduce the number of times the associated debugging aid is called only to find that the interruption of the program execution was a false alarm. This hardware includes a flags register, one bit in a configuration register, seven bits in a status register and some logic to produce a debug bit. In order to implement this hardware, the program code is divided into 3 classes: (1) strictly operating system code which is that part of the operating system code (i.e. the program code stored in the machine to control the operation of the machine) which has no effect on user variables; (2) sharable code which is that part of the operating system code which can affect the user's variables; and (3) user code which is the program written by the user.

The debug scheme utilizes a segmentation scheme of addressing in which each line of code is assigned a code segment number of an offset. The offset is the number of lines from the first line in that segment of code to the line being addressed. The two most significant bits of the code segment number indicate which class of code contains the line of code corresponding to this code segment number. These two bits are utilized in the debugging scheme.

The flags register includes bits which are set in response to the input of debugging aid commands by the user. Each bit in the flags register is used to signal that a debugging aid within a selected set of debugging aid types has been entered by the user to operate somewhere in the program on a selected class or classes of code segments. For example, bit 0 is set to 1 if the user enters a debugging aid command requesting any breakpoints or line traces in his (i.e. the user) program, whereas bit 1 is set to 1 if any breakpoints or line traces have been requested anywhere in either the strictly operating system code or the sharable code.

The five most significant bits in the status register correspond to the trace variable debugging aid and to the debugging instructions other than SOP. These bits are reset at the beginning of each procedure. A bit in the configuration register is set whenever an instruction is executed which alters the memory. Whenever this bit and the bit in the status register corresponding to the trace variable type of debugging aid are set, an interrupt condition is signalled. This interrupt condition is tested at the end of every instruction and when it is detected as true, then control is transferred (i.e. traps) to a trace variable routine in the operating system which determines whether any of the variables changed are within the set of variables being traced. If any of the variables which have been changed are within that set, then only those variables are printed out along with their new values.

Some logic hardware, which is responsive to the first two bits in the code segment number currently present in the status register and to the bits in the flags register, is included to produce the value of a debug bit. When an SOP instruction is encountered, the five most significant bits in the status register are cleared and the debug bit is checked. These five bits include a bit TV which is set if the current procedure contains a variable which is being traced. Therefore the program is interrupted upon an alteration of memory by an instruction only if a variable being traced is altered within the current procedure. The other four bits correspond to each of the debugging instructions other than the SOP instruction. When each of these four debugging instructions is encountered during the execution of the program, its corresponding bit is checked and only if that bit is true is the program execution interrupted to trap to a debugging routine in the operating system code. When each SOP instruction is encountered, these five bits are cleared and the debug bit is checked. If the debug bit is not true, then none of the debugging aids which have been entered by the user affect this procedure so that all five bits remain zero and no traps to debugging routines in the operating system code will be executed. By eliminating such unnecessary traps to debugging routines which would only determine that the trap was in response to a false alarm, the reduction in program execution speed caused by the debugging instructions is significantly decreased. If the debug bit is true then the debug commands which have been entered by the user are checked to see which of the commands applies to this procedure and which of the five bits in the status register need to be set. In general only some of these bits are set so that even in the case of the debug bit being true there is some saving of time by not trapping to debugging routines at some or all of the debug instructions. As a result of this added special hardware, there is a significant slowdown in program execution speed only if the program is being debugged by the user or programmer and even in this case the amount of slowdown is decreased by reducing the number of times a trap to a debugging routine in the operating system code is made only to find that the trap was made in response to a false alarm. The five debugging instructions execute at least as fast as the fastest instruction in the operating system or user code and therefore when none of the debugging aids have been requested the program executes nearly as fast as if the debugging instructions had not been inserted in the program.

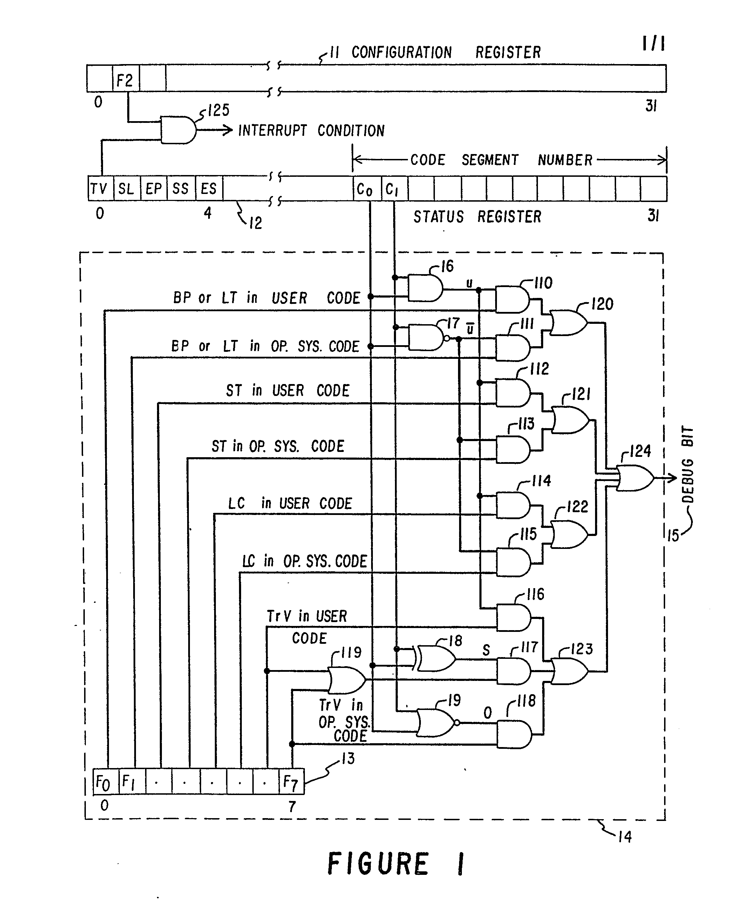

Figure 1 shows additional hardware needed to implement the preferred embodiment of the invention which is described hereafter.

The debugging procedure utilizes five debugging instructions which are inserted into every program: a Start of Procedure (SOP) instruction is included at the start of every procedure; an End of Procedure (EOP) instruction is included at the end of every procedure; a Start of Line (SOL) instruction is included at the start of every line; a Start of Subroutine (SOS) instruction is included at the start of every subroutine and an End of Subroutine (EOS) instruction is included at the end of every subroutine. These instructions enable the program to trap (i.e. transfer control) to a debugging routine in the operating system in order to implement at least the following debugging aids without requiring recompiling of the program; setting and clearing breakpoints at specified lines; tracing changes in specified variables; tracing the number of times a line is executed; stepping execution of a program a line at a time and reporting the history of execution of a program. This debugging scheme therefore enables these debugging aids to be utilitzed on ROM based programs.

Because a trap to a debugging aid is a comparatively slow process, the addition of the debug commands to every program can significantly decrease the speed at which a program executes even when the user is not actively debugging his code or the operating system code. It is therefore important to add hardware to avoid trapping to debugging routines at every debugging instruction. In figure 1 is shown additional hardware which enables many of the unnecessary traps to be avoided.

In figure 1 are shown a configuration register 11 which contains a bit F2 used in the debugging scheme. A device status register 12 also includes 7 bits utilized in the debugging scheme. The most significant bit in the status register is the TV bit which indicates whether tracing of either lines or variables is to be performed. The next 4 most significant bits are the SL, EP, SS and ES bits which indicate whether program control is to transfer to a debugging routine in the operating system when the debugging instructions SOL, EOP, SOS and EOS respectively are encountered. The least significant 12 bits of the Status Register contain the code segment number of the code currently being executed. The first two bits of the code segment number (bits C0 and C1) are utilized in the debugging schemes and indicate the class of the line of code currently being executed. When C0C1 = 00, the line of codes is in the strictly operating system code. When C0C1 = 01 or 10, the line code is in the sharable code. When C0C1 = 11 the line of code is in the user code.

A Flags Register 13 contains eight flag bits F0, ... F7 which are also used in the debugging scheme. These flag bits are used as follows:

Bit 0: Set to 1 if any breakpoints or line traces have been requested anywhere in the current user's program (not just in the current procedure.

Bit 1: Set to 1 if any breakpoints or line traces have been requested anywhere in the operating system (which includes both the strictly operating system code and sharable code).

Bit 2: Set to 1 if the current user is stepping through any of his procedures.

Bit 3: Set to 1 if any operating system procedures are being stepped through.

Bit 4: Set to 1 if line count data is being generated for any of current user's procedures.

Bit 5: Set to 1 if line count data is being generated for any of the procedures in the operating system.

Bit 6: Set to 1 if any variables in the current user's program are being traced.

Bit 7: Set to 1 if any variables in the operating system are being traced.

Logic 14 is responsive to the flag bits in flags register 13 and to the first two bits C0 and C1 of the code segment number held in status register 12 in order to produce the logic value of a debug bit 15. This debut bit enables many of the unnecessary traps when debug instructions are encountered to be avoided. The following symbols have the indicated meanings in what follows: BP represents breakpoint; LT represents line trace; St represents stepping; LC represents line count; TrV represents trace variables; U represents code within the class of code denoted as user code; a U with a bar over it represents the logic negation of U; S represents code within the class of code denoted as sharable code; and O represents a code within the class of code denoted as strictly operating system code.

Logic 14 includes the following four logic gates connected to bits C0 and C1 in status register 12: (1) AND gate 16 which is true (i.e. U = 1) only if the currently executing procedure is in the user's code; (2) NAND gate 17 which is true only if the currently executing procedure is in the non-user code (note that not-U = S OR O where OR represents the logic OR operation); (3) exclusive OR gate 18 which is true (i.e. S = 1) only if the currently executing procedure is in the sharable code; and (4) not-OR gate which is true (i.e. O = 1) only if the currently executing procedure is

Hewlett-Packard Company
Int. Ref.: EP 1585

0087064

- 9 -

in the strictly operating system code. Therefore the eight bits in the flags register represent eight different types of debugging aids which are active anywhere in the user's program whereas the bits C0 and C1 are used to indicate the class of code of the code currently being executed.

AND-gates 110-116 and 118 each have an input connected to the output of bits F0 - F7 respectively. AND gate 117 has an input connected to the output of gate 119 and gate 119 has a pair of inputs each of which is connected to bits F6 and F7 respectively. The logical significance of each of the flag bits is indicated above each of the lines connected to those bits. Each of AND gates 110, 112, 114 and 116 has its second input connected to the output of AND gate 16 and each of AND gates 111, 113, 115 and 117 has its second input connected to the output of NAND gate 17. Each of AND gates 117 and 118 has its second input connected to the output of exclusive-OR gate 117 and not OR gate 118 respectively. The outputs of AND gates are connected as shown in figure 1 to OR gates 120 - 123 which in turn have their outputs connected to the inputs of OR gate 124 to generate the debug bit 15. The effect of this logic is to check whether the class of commands in the currently executing procedure corresponds to the classes of debugging aids implemented anywhere in the user's program. Note that the operating system code also includes the debugging instructions so that when such code is called by the user's program it can also be debugged. The bits C0 and C1 in the code segment number for such instructions will indicate the class of code in which such instructions are classified.

If the debug bit is zero then none of the debugging aids which have been entered affect the currently executing procedure so that no traps need be made at any of the debugging instructions within the currently executing procedure. Similarly, if only some of the debugging instructions need be acted on to implement those debugging aids which have been entered and affect the currently executing procedure then only those instructions should be acted on. In order to achieve this the debug bit is used in correspondence with the debug instructions and the five most significant bits in the status register. Whenever the Start of Procedure (SOP) instruction is encountered during execution of a user's program the five most significant bits of the status register are cleared and the debug bit is checked.

If the debug bit is false, then these five most significant bits remain 0. As each of the following debugging instructions other than an SOP instruction is encountered, its corresponding bits in bits 1 - 4 in the status register is checked and since all of those bits are zero, no trap to the operating system will occur - instead the execution of the program will continue. However, if the debug bit is true, then a trap will occur to a routine in the operating system which checks the debugging aids which have been entered and sets those of the five most significant bits in the status register which need to be set to implement the debugging aids which have been entered by the user. TV is set if a variable contained within the procedure is to be traced. SL is set if a breakpoint is set within the procedure, lines to be stepped through occur within the procedure or if a line to be traced occurs within the procedure. EP is set if a history debugging aid has been entered by the user or if any other operations are desired to occur at the end of a procedure. SS and ES are similarly set if some operation by the operating system code is to occur at a start or an end of subroutine.

Since a trap to the operating system to see if a variable which has been changed need only occur when both a variable has been changed and when the trace variable debugging aids which have been requested apply to the currently executing procedure, this trap need only occur when both TV and F2 are set. Therefore an AND gate 124 responsive to the TV and F2 bits is used to produce a debug bit which is checked after each instruction is executed. Only if this interrupt is true does a trap occur to the operating system to see if any of the variables which have been changed are within the set of variables which are to be traced. When memory is changed, a parameter is generated which indicates the location of the first byte in memory which has been changed as well as the number of bytes which have been changed. If a trap to the operating system is made to see if any of the variables which have changed are in the set to be traced, then this parameter is also sent to the operating system to enable it to locate the part of memory which has been changed. Only those variables which have been changed and are within the set of variables to be traced are printed out along with their corresponding new values.

Although the five most significant bits in the status register are only updated at SOP instructions, other choices can be made. This choice was made because all of the lines of code within the same class of code and also because programmers tend to think in terms of procedures when they implement debugging aids.

CLAIMS:

1. A method of executing and debugging a program under control of an operating system, wherein in response to user debugging demands program execution is interrupted at points in the program determined by the entered debugging commands to execute debugging routines in the operating system, characterized by the following steps:

   preparing the program in a language which includes a set of debugging instructions, each of which indicates a type of boundary of a set of instructions in the program;

   providing at least one debugging instruction in the program;

   associating each of the memory locations (SL, EP, SS, ES) of a section of memory (11, 12) with a debugging instruction setting each either true or false,

   checking the value of the associated memory location upon execution of a debugging instruction with which a memory location is associated,

   resuming the program executions at the next instruction in the program if this location is false, and

   interrupting the execution of the program and making a jump to a debugging routine in the operation system if this location is true.

2. The method as in claim 1, characterized in that the values of the memory locations (SL, EP, SS, ES) in the first set are set in response to user debugging commands.

3. The method as in claim 2, characterized in that:

   at least one of the debugging commands requires a jump to a debugging routine when a variable stored in memory is changed;

   setting true a memory location (TV) in a memory section (11, 12) in response to the entry of this debugging command;

   generating an interrupt, when a variable stored in memory is changed if, and only if, this memory location (TV) is·true and interrupted a jump is made to a debugging routine.

4. A device capable of executing programs consisting of instructions and also capable of debugging programs without the need to recompile the programs, said device being characterized by

an operating system for executing and debugging programs, said operating system being responsive to a set of instructions used to write the programs, said set of instructions including at least one debugging instruction and at least one debugging command for requesting that an associated debugging aid be implemented;

means for entering instructions and debugging commands to the operating system for response by the operating system;

means for trapping to the operating system in response to debugging instructions; said means for trapping including means for eliminating at least some of the traps to memory which are not required to implement the debugging aids associated with all of the debugging aids which have been requested.

FIGURE 1